# FASCICULE DE BREVET EUROPEEN

(11) **EP 1 640 620 B1**
(45) Date de publication et mention de la délivrance du brevet: **02.01.2008**
(21) Numéro de dépôt: 05300764.7
(22) Date de dépôt: 23.09.2005
(51) Int. Cl.: F16B 5/02

(54) **Dispositif de fixation et de filtration des vibrations, et procédé d'assemblage utilisant ce dispositif pour l'industrie automobile**
Vorrichtung zum Befestigen und zum Filtern von Schwingungen und Montageverfahren mit derselben in der Kraftfahrzeugindustrie
Fixing and vibration filtering device and method of assembly using such a device in the automotive industry

(30) Priorité: 27.09.2004 FR 0410185
(43) Date de publication de la demande: 29.03.2006
(73) Titulaire: RENAULT S.A.S., 92100 Boulogne Billancourt (FR)
(72) Inventeur: Chotte, Jean-Yves, 92220 Bagneux (FR); Corde, Christian, 92370 Chaville (FR)

(56) Documents cités:
- FR-A- 2 456 260
- US-B1- 6 499 714

## Description

L'invention concerne un dispositif de fixation et de filtration des vibrations et un procédé d'assemblage utilisant ce dispositif pour l'industrie automobile. Un tel dispositif est plus particulièrement destiné à fixer un accessoire sur un élément d'un véhicule automobile générant des vibrations, tel que le moteur par exemple.

Le moteur, du fait du mouvement alternatif des pistons et de la rotation de divers éléments (vilebrequin, volant moteur, ...), transmet en effet d'importantes vibrations aux divers accessoires qu'il supporte générant ainsi une source de bruit non négligeable.

Généralement, le bloc moteur est relié à la caisse du véhicule automobile par des supports amortissant les vibrations. Il s'agit par exemple de pièces en élastomère (silentbloc) ou de dispositifs comportant un liquide. Il n'existe actuellement pas de solution similaire pour les accessoires fixés sur le bloc moteur.

Certains dispositifs de fixation tentent de réduire les vibrations transmises entre les éléments assemblés. Ils sont généralement formés d'une vis entourée d'un élastomère. Ainsi, le document US-5 876 023 décrit un dispositif de fixation formé d'une vis traversant les éléments à fixer. La vis est vissée dans un insert logé dans un orifice de l'un des éléments à fixer. Cet insert est formé de deux manchons interne et externe rigides reliés par un matériau élastomère amortissant les vibrations entre le manchon externe en contact avec un élément, et le manchon interne en contact avec la vis.

Ce type de dispositif présente toutefois l'inconvénient de placer la vis de fixation en contact avec les deux éléments à solidariser, de sorte que les vibrations peuvent être transmises entre les éléments par la vis.

Les seules solutions existantes permettant d'obtenir une liaison entièrement découplée ne permettent pas de garantir une position constante en raison de la déformation de l'élastomère utilisé.

L'invention vise à pallier ces inconvénients en proposant un dispositif de fixation et de filtration des vibrations permettant d'assembler deux éléments de manière découplée. Le dispositif selon l'invention présente également l'avantage d'assurer une position relative constante des deux éléments assemblés.

A cet effet, l'objet de l'invention concerne un dispositif de fixation et de filtration des vibrations destiné à assembler deux éléments, caractérisé en ce qu'il comprend :
- un premier écrou dont une face d'extrémité est pourvue d'une empreinte,
- un boulon formé d'un deuxième écrou et d'une vis de fixation dont une extrémité présente une forme complémentaire de l'empreinte du premier écrou,
- un manchon en matière élastique emmanché autour du premier écrou et solidaire de celui-ci, l'extrémité du manchon située du côté de l'empreinte du premier écrou se prolongeant au-delà de l'écrou axialement, et comportant un orifice de réception de la vis d'axe confondu avec l'axe du premier écrou, et un organe de retenue de la vis saillant radialement dans l'orifice de réception de la vis et apte à venir en prise avec la vis afin d'empêcher sa rotation par rapport au manchon et son retrait de l'orifice de réception, cet organe étant agencé de telle manière que la vis n'est pas en contact avec le premier écrou lorsqu'elle est en prise avec l'organe et qu'elle ne subit aucune force axiale en direction du premier écrou.

En variante, l'organe de retenue décrit ci-dessus est remplacé par un organe de retenue de la vis saillant radialement dans l'orifice de réception de la vis et apte à venir en prise avec la vis afin d'empêcher sa rotation par rapport au manchon et son retrait de l'orifice de réception, cet organe étant agencé de telle manière que la vis n'est pas en contact avec le premier écrou uniquement lorsque le deuxième écrou est serré sur la vis pour maintenir un des éléments entre lui et le manchon.

Ces deux variantes du dispositif présentent l'avantage d'être simples à réaliser et à mettre en oeuvre, et permettent un découplage total entre la vis du boulon destiné à être fixé à un élément, et le premier écrou, destiné à être fixé à l'autre élément à assembler.

Dans un mode de réalisation particulier, l'organe de retenue est formé d'au moins deux languettes sensiblement opposées, noyées dans le manchon et s'étendant dans un plan sensiblement perpendiculaire à l'axe de l'orifice de réception de la vis, et la surface de la vis est pourvue d'encoches aptes à recevoir les extrémités des languettes.

De préférence, les languettes sont solidaires d'une rondelle annulaire noyée dans le manchon.

Avantageusement, le manchon est en caoutchouc et/ou l'organe de retenue est en métal.

L'invention concerne également un procédé d'assemblage de deux éléments d'un véhicule automobile au moyen d'un dispositif de fixation selon l'invention, comprenant les étapes consistant à :
(i) visser sans serrer le premier écrou, sur lequel est fixé le manchon, sur un premier élément du véhicule,
(ii) introduire la vis dans l'empreinte de réception de la vis, puis, l'extrémité de la vis étant engagée dans l'empreinte du premier écrou, tourner la vis de manière à serrer le premier écrou sur le premier élément,
(iii) faire passer l'extrémité opposée de la vis à travers un orifice d'un deuxième élément du véhicule, jusqu'à ce que cet élément soit en contact avec le manchon, et visser le deuxième écrou sur la vis de manière à serrer le deuxième élément entre ce deuxième écrou et le manchon.

En particulier avec le dispositif correspondant à la première variante, la vis ne peut être introduite dans le premier écrou que par déformation de l'organe de retenue et/ou du manchon, lors du serrage du premier écrou. Lorsque ce serrage est terminé, la vis est entièrement découplée de l'écrou. Dans la deuxième variante du dispositif, c'est le serrage du deuxième écrou qui va permettre, par déformation de l'organe de retenue et/ou du manchon, un découplage complet de la vis.

Dans les deux variantes, la transmission des vibrations entre le premier élément et le deuxième élément est amortie par le manchon élastique. Par ailleurs, la vis étant solidaire en rotation du manchon, ce dernier ne se déformera pas lors de la rotation de la vis pour serrer le premier écrou, ou lors du vissage du deuxième écrou sur la vis.

Dans un mode de réalisation préféré, le premier élément est le moteur et le deuxième élément est un accessoire, par exemple un capotage.

D'autres caractéristiques et avantages de l'invention ressortiront de la description faite ci-après en référence aux dessins annexés, non limitatifs, dans lesquels :
- les figures 1 à 5 représentent les différentes étapes d'utilisation d'un dispositif de fixation selon l'invention, ce dernier étant représenté en coupe axiale,
- la figure 6 représente une vue de face de l'organe de retenue du dispositif représenté sur les figures 1 à 5.

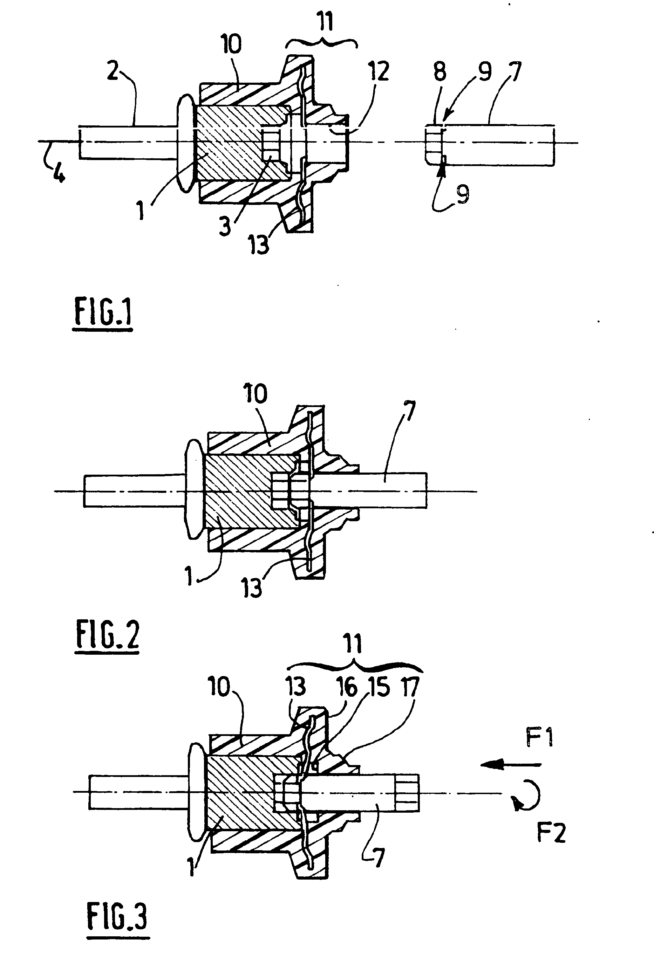

Le dispositif de fixation et de filtration des vibrations représenté sur les figures 1 à 5 comprend un premier écrou 1 destiné à être fixé sur un élément d'un véhicule automobile, par exemple un moteur (non représenté).

A cet effet, une face du premier écrou est pourvue d'une tige 2 destinée à être fixée sur le moteur. Dans une variante non représentée, l'écrou peut comporter un alésage fileté destiné à être vissé sur une tige filetée solidaire du moteur.

La face opposée du premier écrou présente une empreinte 3, par exemple une empreinte à six pans, d'axe confondu avec l'axe 4 de l'écrou 1 et de la tige 2.

Le dispositif comprend également un boulon 5 formé d'un deuxième écrou 6 et d'une vis de fixation 7 dont une extrémité 8 présente une forme complémentaire de l'empreinte 3 du premier écrou. Des encoches 9 sont prévues sur la surface latérale de la vis, à proximité de son extrémité 8.

Le dispositif de fixation comprend également un manchon en matière élastique 10 emmanché sur le premier écrou 1 et solidaire de ce dernier. Ce manchon est par exemple serti sur l'écrou 1. Avantageusement, la surface externe du premier écrou, en contact avec le manchon, est rugueuse afin d'améliorer l'adhérence du manchon sur l'écrou.

L'extrémité 11 du manchon, située du côté de l'empreinte 3 du premier écrou, se prolonge au-delà de l'écrou dans la direction axiale. Cette extrémité 11 comporte un orifice 12 d'axe confondu avec l'axe 4 du premier écrou. Cet orifice 12 est destiné à recevoir la vis de fixation 7. Son diamètre interne est de préférence sensiblement identique au diamètre externe de la vis pour un meilleur maintien de celle-ci.

Le manchon 10 comprend également un organe de retenue 13 saillant radialement dans l'orifice 12 de réception de la vis. Cet organe est conçu pour être apte à venir en prise avec la vis lorsque celle-ci est engagée dans l'orifice 12, afin d'empêcher la rotation de la vis par rapport au manchon, ainsi que le retrait de la vis de l'orifice 12. Cet organe est également situé de telle manière que, lorsque aucune force axiale n'est exercée sur la vis, en particulier en direction du premier écrou, celle-ci n'est pas en contact avec le premier écrou.

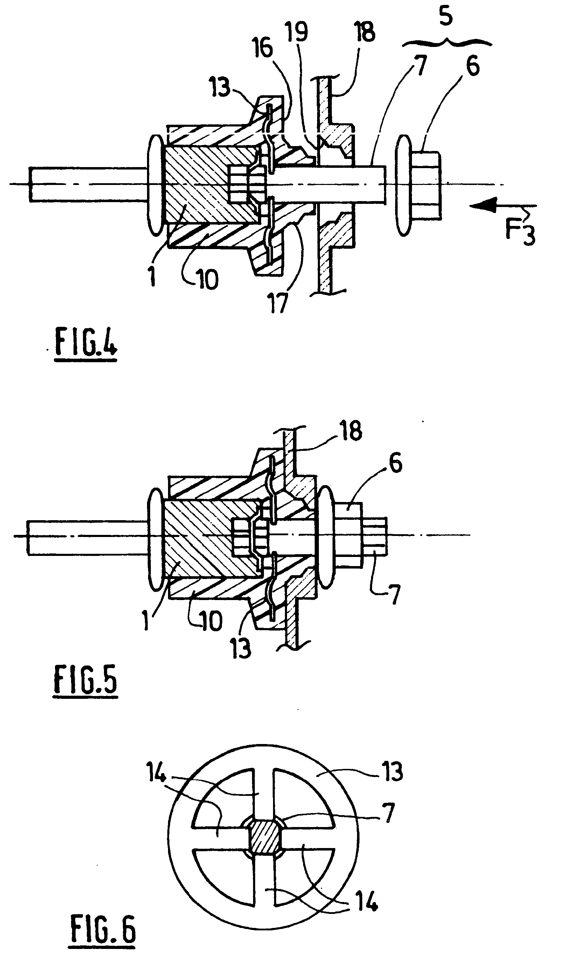

Dans l'exemple représenté, l'organe de retenue 13 est formé d'une rondelle rigide comportant quatre languettes 14 opposées deux à deux saillant radialement vers le centre de la rondelle (figure 6), à l'intérieur de l'orifice de réception de la vis 12. La rondelle et les languettes sont situées sensiblement dans un même plan, sensiblement perpendiculaire à l'axe 4 du premier écrou. La rondelle 13 et une partie des languettes 14 sont noyées dans le matériau élastique du manchon, tel que visible sur les figures 1 à 5. Bien entendu, les languettes peuvent être plus ou moins nombreuses, de préférence réparties régulièrement sur la périphérie de l'orifice.

Les encoches 9 de la vis sont conçues pour pouvoir recevoir les extrémités libres des languettes 14 de manière à empêcher toute rotation de la vis par rapport au manchon, ainsi que le retrait de la vis de l'orifice de réception 12.

Dans l'exemple représenté, le plan radial contenant les languettes 14 est distant de la face du premier écrou portant l'empreinte 3, d'une distance au moins égale (et de préférence sensiblement égale) à la longueur de la vis 7 comprise entre la face de son extrémité 8 et les encoches 9. Ainsi, lorsque les languettes 14 sont en prise avec les encoches 9, l'extrémité 8 de la vis n'est pas en contact avec le premier écrou, en absence de poussée axiale.

Dans l'exemple, la rondelle et les languettes sont en métal, de sorte que les languettes présentent une certaine flexibilité. De plus, dans l'exemple, les languettes font saillie du manchon sur une certaine longueur du côté de leur extrémité libre de sorte qu'elles peuvent se déformer librement sous l'effet d'une poussée axiale de la vis en direction du premier écrou.

Afin de permettre le serrage du deuxième écrou sur la vis sans provoquer de déformation des extrémités de languettes qui ne sont pas noyées dans le manchon, ce dernier présente alors de préférence une paroi interne de butée 15 pour les extrémités des languettes saillant du manchon, destinée à limiter leur déplacement dans la direction axiale en s'éloignant du premier écrou. Ainsi, lorsqu'une force axiale de retrait est exercée sur la vis, les extrémités des languettes sont en appui sur cette paroi de butée 15. Cette dernière est par exemple obtenue par une augmentation du diamètre de l'orifice 12 de réception de la vis, qui présente un diamètre supérieur à celui de la vis dans sa partie située entre les languettes 14 et la face du premier écrou 1 comportant l'empreinte (figure 3).

Le manchon présente également, du côté de son orifice 12 de réception de la vis, une surface externe d'appui 16 s'étendant dans un plan sensiblement perpendiculaire à l'axe 4 et dirigée du côté opposée au premier écrou. Cette surface d'appui, destinée à recevoir la surface de l'un des éléments à fixer, peut être située, comme dans l'exemple, sensiblement à mi-longueur de l'orifice 12 de réception de la vis.

Par ailleurs, de préférence, l'extrémité 11 du manchon, comportant l'orifice 12 de réception de la vis, présente une forme externe sensiblement tronconique 17. Cette partie tronconique 17 peut être prévue suffisamment longue pour pouvoir être introduite avec la vis dans l'orifice de l'élément à fixer sur sensiblement toute la profondeur de cet orifice, de manière à limiter un contact direct, et donc une transmission de vibrations, entre la vis et cet élément.

L'assemblage d'éléments au moyen du dispositif décrit ci-dessus est exposé ci-après en référence aux figures 1 à 5.

On commence par mettre en place le premier écrou 1 en le vissant, sans le serrer, sur le moteur, tel que représenté figure 1. Le manchon pourvu de sa rondelle 13 est déjà fixé sur l'écrou 1.

On réalise de préférence lors de la fabrication du dispositif l'introduction de la vis dans le manchon. A cet effet, la vis de fixation 7 est approchée suivant l'axe 4 de l'écrou et introduite dans l'orifice 12 jusqu'à ce que les extrémités des languettes 14 soient en prise avec les encoches 9 de la vis, tel que représenté sur la figure 2. La vis 7, lorsqu'elle ne subit aucune force axiale, n'est alors pas en contact avec le premier écrou 1.

On exerce ensuite une poussée axiale F1 sur la vis en direction du premier écrou 1 (figure 3) afin d'amener l'extrémité 8 de la vis dans l'empreinte 3 du premier écrou, tel que représenté sur la figure 3. Les languettes 14 et/ou le manchon 10 sont alors déformés sous l'effet de cette poussée axiale. Simultanément, la vis est tournée suivant la flèche F2 de la figure 3 pour serrer l'écrou 1 sur le moteur.

Lorsque le serrage de l'écrou 1 est terminé, on relâche la poussée exercée sur la vis en direction du premier écrou, de sorte que la vis est ramenée dans la position représentée sur la figure 2 sous l'effet de la force exercée par les languettes 14 sur les encoches 9, les languettes et/ou le manchon reprenant leur position/forme initiale. La vis de fixation n'est alors plus en contact avec le premier écrou 1.

Un deuxième élément 18 du véhicule à fixer sur le moteur est alors approché suivant la direction de la flèche F3 de la figure 4, de manière à introduire l'extrémité libre de la vis, ainsi que la partie tronconique 17 de l'extrémité 11 du manchon, dans un orifice 19 ménagé à cet effet. Le deuxième élément 18 est approché jusqu'à ce que sa surface soit en appui contre la surface d'appui 16 du manchon, tel que représenté sur la figure 5. Le deuxième écrou 6 est alors vissé sur cette extrémité de la vis de manière à serrer le deuxième élément entre lui et le manchon. Le maintien de la vis par les languettes empêche la rotation de la vis lors du serrage du deuxième écrou, de même que l'accouplement possible par un effort suivant F1 de la vis dans l'empreinte, de sorte que l'écrou 6 peut être serré avec force.

Bien entendu, d'autres modes de réalisation de l'organe de retenue peuvent être envisagés pourvus qu'ils permettent de désengager la vis de fixation du premier écrou, au moins lorsque le deuxième écrou 6 est serré sur la vis. L'organe de retenue peut en effet être conçu et agencé pour que la vis soit hors de contact du premier écrou uniquement lorsque le deuxième écrou est serré sur la vis, un élément à maintenir étant serré entre le manchon et l'écrou. La solution décrite en référence aux figures est toutefois préférée car elle n'impose pas de déformation permanente à l'organe de retenue lorsque des éléments sont assemblés par le dispositif de fixation.

L'organe de retenue présente également l'avantage de limiter les déformations du manchon élastique lors du serrage du premier écrou, le manchon tournant simultanément avec le premier écrou et la vis. Il permet également de limiter les déplacements de l'élément maintenu par le boulon lors du serrage de ce dernier.

## Revendications

1. Dispositif de fixation et de filtration des vibrations destiné à assembler deux éléments, **caractérisé en ce qu**'il comprend :
- un premier écrou (1) dont une face d'extrémité est pourvue d'une empreinte (3),
un boulon (5) formé d'un deuxième écrou (6) et d'une vis de fixation (7) dont une extrémité (8) présente une forme complémentaire de l'empreinte du premier écrou,
- un manchon (10) en matière élastique emmanché autour du premier écrou (1) et solidaire de celui-ci, l'extrémité (11) du manchon située du côté de l'empreinte du premier écrou se prolongeant au-delà de cet écrou axialement, et comportant un orifice (12) de réception de la vis d'axe confondu avec l'axe (4) du premier écrou, et un organe de retenue (13) de la vis saillant radialement dans l'orifice (12) de réception de la vis et apte à venir en prise avec la vis afin d'empêcher sa rotation par rapport au manchon et son retrait de l'orifice de réception, cet organe (13) étant agencé de telle manière que la vis (7) n'est pas en contact avec le premier écrou (1) lorsqu'elle est en prise avec l'organe (13) et qu'elle ne subit aucune force axiale en direction du premier écrou.

2. Dispositif selon la revendication 1, dans lequel l'organe de retenue est remplacé par un organe de retenue de la vis saillant radialement dans l'orifice de réception de la vis et apte à venir en prise avec la vis afin d'empêcher sa rotation par rapport au manchon et son retrait de l'orifice de réception, cet organe étant agencé de telle manière que la vis n'est pas en contact avec le premier écrou uniquement lorsque le deuxième écrou est serré sur la vis pour maintenir un des éléments entre lui et le manchon.

3. Dispositif selon la revendication 1 ou 2, **caractérisé en ce que** l'organe de retenue (13) est formé d'au moins deux languettes (14) sensiblement opposées, noyées dans le manchon (10) et s'étendant dans un plan sensiblement perpendiculaire à l'axe (4) de l'orifice (12) de réception de la vis, et **en ce que** la surface de la vis est pourvue d'encoches (9) aptes à recevoir les extrémités des languettes.

4. Dispositif selon la revendication 3, **caractérisé en ce que** les languettes (14) sont solidaires d'une rondelle annulaire (13) noyée dans le manchon.

5. Dispositif de fixation selon l'une des revendications 3 ou 4, **caractérisé en ce que** le manchon (10) présente une paroi interne de butée (15) pour les extrémités des languettes (14) saillant du manchon, destinée à limiter leur déplacement dans la direction axiale (4) en s'éloignant du premier écrou (1).

6. Dispositif de fixation selon l'une des revendications 1 à 5, **caractérisé en ce que** le manchon (10) présente, du côté de l'orifice (12) de réception de la vis, une surface externe d'appui (16) sensiblement annulaire s'étendant dans un plan sensiblement perpendiculaire à son axe (4) et dirigée du côté opposée au premier écrou (1).

7. Dispositif de fixation selon l'une des revendications 1 à 6, **caractérisé en ce que** l'extrémité (11) du manchon comportant l'orifice (12) de réception de la vis présente une forme extérieure sensiblement tronconique (17).

8. Dispositif de fixation selon l'une des revendications 1 à 7, **caractérisé en ce que** le manchon (10) est en caoutchouc et/ou l'organe de retenue (13) est en métal.

9. Procédé d'assemblage de deux éléments d'un véhicule automobile au moyen d'un dispositif de fixation selon l'une des revendications précédentes, **caractérisé en ce qu**'il comprend les étapes consistant à :
(i) visser sans serrer le premier écrou (1), sur lequel est fixé le manchon, sur un premier élément du véhicule,
(ii) introduire la vis (7) dans l'empreinte (3) de réception de la vis, puis, l'extrémité de la vis étant engagée dans l'empreinte (3) du premier écrou, tourner la vis de manière à serrer le premier écrou sur le premier élément,
(iii) faire passer l'extrémité opposée de la vis (7) à travers un orifice (19) d'un deuxième élément (18) du véhicule, jusqu'à ce que cet élément soit en contact avec le manchon, et visser le deuxième écrou sur la vis de manière à serrer le deuxième élément entre ce deuxième écrou et le manchon.

10. Procédé d'assemblage selon la revendication 9, dans lequel le premier élément est un moteur et le deuxième élément (18) est un accessoire.

## Claims

1. Fastening and vibration-filtering device intended to assemble two elements, **characterized in that** it comprises:
- a first nut (1) of which one end face is provided with a socket (3),
- a bolt (5) formed by a second nut (6) and by a fastening screw (7) of which one end (8) has a shape which complements the socket of the first nut,
- a sleeve (10) of elastic material fitted around the first nut (1) and secured thereto, the end (11) of the sleeve that is situated towards the socket of the first nut being extended axially beyond this nut, and comprising a screw reception orifice (12) whose axis is coincident with the axis (4) of the first nut, and a screw retention member (13) projecting radially into the screw reception orifice (12) and designed to engage with the screw so as to prevent its rotation with respect to the sleeve and its withdrawal from the reception orifice, this member (13) being arranged in such a way that the screw (7) is not in contact with the first nut (1) when it is engaged with the member (13) and that it is not subjected to any axial force in the direction of the first nut.

2. Device according to Claim 1, in which the retention member is replaced by a screw retention member projecting radially into the screw reception orifice and designed to engage with the screw so as to prevent its rotation with respect to the sleeve and its withdrawal from the reception orifice, this member being arranged in such a way that the screw is not in contact with the first nut only when the second nut is tightened on the screw in order to retain one of the elements between it and the sleeve.

3. Device according to Claim 1 or 2, **characterized in that** the retention member (13) is formed by at least two substantially opposite tongues (14) which are embedded in the sleeve (10) and extend in a plane substantially perpendicular to the axis (4) of the screw reception orifice (12), and **in that** the surface of the screw is provided with notches (9) designed to receive the ends of the tongues.

4. Device according to Claim 3, **characterized in that** the tongues (14) are secured to an annular washer (13) embedded in the sleeve.

5. Fastening device according to either of Claims 3 and 4, **characterized in that** the sleeve (10) has an internal stop wall (15) for the ends of the tongues (14) projecting from the sleeve, this wall being intended to limit their movement in the axial direction (4) away from the first nut (1).

6. Fastening device according to one of Claims 1 to 5, **characterized in that** the sleeve (10) has, towards the screw reception orifice (12), a substantially annular external bearing surface (16) extending in a plane substantially perpendicular to its axis (4) and directed away from the first nut (1).

7. Fastening device according to one of Claims 1 to 6, **characterized in that** the end (11) of the sleeve that comprises the screw reception orifice (12) has a substantially frustoconical outer shape (17).

8. Fastening device according to one of Claims 1 to 7, **characterized in that** the sleeve (10) is made of rubber and/or the retention member (13) is made of metal.

9. Method of assembling two elements of a motor vehicle by means of a fastening device according to one of the preceding claims, **characterized in that** it comprises the steps consisting in:
(i) screwing without tightening the first nut (1), to which the sleeve is fastened, on a first element of the vehicle,
(ii) inserting the screw (7) into the screw reception socket (3) and then, with the end of the screw being engaged in the socket (3) of the first nut, turning the screw so as to tighten the first nut on the first element,
(iii) passing the opposite end of the screw (7) through an orifice (19) in a second element (18) of the vehicle, until this element is in contact with the sleeve, and screwing the second nut on the screw so as to clamp the second element between this second nut and the sleeve.

10. Assembly method according to Claim 9, in which the first element is an engine and the second element (18) is an accessory.

## Patentansprüche

1. Vorrichtung zur Befestigung und zum Filtern der Schwingungen, die dazu bestimmt ist, zwei Elemente zusammenzubauen, **dadurch gekennzeichnet, dass** sie aufweist:
- eine erste Mutter (1), von der eine Endseite mit einer Vertiefung (3) versehen ist,
- einen Bolzen (5), der von einer zweiten Mutter (6) und von einer Befestigungsschraube (7) gebildet wird, von der ein Ende (8) eine zur Vertiefung der ersten Mutter komplementäre Form aufweist,
- eine Muffe (10) aus elastischem Material, die um die erste Mutter (1) herum aufgeschoben und fest mit dieser verbunden ist, wobei das Ende (11) der Muffe, das sich auf der Seite der Vertiefung der ersten Mutter befindet, sich axial über diese Mutter hinaus verlängert und eine Aufnahmeöffnung (12) für die Schraube, deren Achse mit der Achse (4) der ersten Mutter zusammenfällt, und ein Rückhalteorgan (13) für die Schraube aufweist, das radial in die Aufnahmeöffnung (12) der Schraube vorsteht und mit der Schraube in Eingriff kommen kann, um ihre Drehung bezüglich der Muffe und ihr Herausziehen aus der Aufnahmeöffnung zu verhindern, wobei dieses Organ (13) so angeordnet ist, dass die Schraube (7) nicht mit der ersten Mutter (1) in Kontakt ist, wenn sie mit dem Organ (13) in Eingriff ist und wenn sie keine axiale Kraft in Richtung der ersten Mutter erfährt.

2. Vorrichtung nach Anspruch 1, bei der das Rückhalteorgan durch ein Rückhalteorgan der Schraube ersetzt wird, das radial in die Aufnahmeöffnung der Schraube vorsteht und mit der Schraube in Eingriff kommen kann, um ihre Drehung bezüglich der Muffe und ihr Herausziehen aus der Aufnahmeöffnung zu verhindern, wobei dieses Organ so angeordnet ist, dass die Schraube nur dann nicht mit der ersten Mutter in Kontakt ist, wenn die zweite Mutter auf der Schraube angezogen wird, um eines der Elemente zwischen ihr und der Muffe zu halten.

3. Vorrichtung nach Anspruch 1 oder 2, **dadurch gekennzeichnet, dass** das Rückhalteorgan (13) von mindestens zwei einander im Wesentlichen gegenüberliegenden Zungen (14) gebildet wird, die in die Muffe (10) versenkt sind und sich in einer Ebene im Wesentlichen lotrecht zur Achse (4) der Aufnahmeöffnung (12) der Schraube erstrecken, und dass die Oberfläche der Schraube mit Kerben (9) versehen ist, die die Enden der Zungen aufnehmen können.

4. Vorrichtung nach Anspruch 3, **dadurch gekennzeichnet, dass** die Zungen (14) fest mit einer Ringscheibe (13) verbunden sind, die in die Muffe versenkt ist.

5. Befestigungsvorrichtung nach einem der Ansprüche 3 oder 4, **dadurch gekennzeichnet, dass** die Muffe (10) eine innere Anschlagwand (15) für die Enden der aus der Muffe vorstehenden Zungen (14) aufweist, die dazu bestimmt ist, deren Verschiebung in axialer Richtung (4) weg von der ersten Mutter (1) zu begrenzen.

6. Befestigungsvorrichtung nach einem der Ansprüche 1 bis 5, **dadurch gekennzeichnet, dass** die Muffe (10) auf der Seite der Aufnahmeöffnung (12) der Schraube eine im Wesentlichen ringförmige äußere Auflagefläche (16) aufweist, die sich in einer Ebene im Wesentlichen lotrecht zu ihrer Achse (4) erstreckt und zur der ersten Mutter (1) entgegengesetzten Seite gerichtet ist.

7. Befestigungsvorrichtung nach einem der Ansprüche 1 bis 6, **dadurch gekennzeichnet, dass** das Ende (11) der Muffe, das die Aufnahmeöffnung (12) der Schraube aufweist, eine im Wesentlichen kegelstumpfförmige Außenform (17) hat.

8. Befestigungsvorrichtung nach einem der Ansprüche 1 bis 7, **dadurch gekennzeichnet, dass** die Muffe (10) aus Kautschuk und/oder das Rückhalteorgan (13) aus Metall ist.

9. Verfahren zum Zusammenbau von zwei Elementen eines Kraftfahrzeugs mit Hilfe einer Befestigungsvorrichtung nach einem der vorhergehenden Ansprüche, **dadurch gekennzeichnet, dass** es die Schritte aufweist, die darin bestehen:
(i) die erste Mutter (1), auf der die Muffe befestigt ist, ohne Anziehen auf ein erstes Element des Fahrzeugs zu schrauben,
(ii) die Schraube (7) in die Aufnahmevertiefung (3) der Schraube einzuführen und dann, wenn das Ende der Schraube in die Vertiefung (3) der ersten Mutter eingeführt ist, die Schraube zu drehen, um die erste Mutter auf dem ersten Element anzuziehen,
(iii)das entgegengesetzte Ende der Schraube (7) durch eine Öffnung (19) eines zweiten Elements (18) des Fahrzeugs zu führen, bis dieses Element mit der Muffe in Kontakt ist, und die zweite Mutter auf die Schraube zu schrauben, um das zweite Element zwischen dieser zweiten Mutter und der Muffe einzuspannen.

10. Zusammenbauverfahren nach Anspruch 9, bei dem das erste Element ein Motor und das zweite Element (18) ein Zubehörteil ist.
